# EUROPEAN PATENT SPECIFICATION

(11) **EP 1 953 168 B1**
(45) Date of publication and mention of the grant of the patent: **01.07.2009**
(21) Application number: 08151076.0
(22) Date of filing: 05.02.2008
(51) Int. Cl.: C07F 7/20

(54) **Method of purifying organosilicon compositions used as precursors in chemical vapor deposition**
Verfahren zur Reinigung von als Vorläufer bei der Abscheidung chemischer Dämpfe verwendeten Organosilicium-Zusammensetzungen
Procédé de purification de compositions d'organosilicone en tant que précurseurs dans le dépôt de vapeur chimique

(30) Priority: 05.02.2007 US 899458 P; 24.05.2007 US 753073
(43) Date of publication of application: 06.08.2008
(73) Proprietor: Air Products and Chemicals, Inc., Allentown, PA 18195-1501 (US)
(72) Inventor: Mayorga, Steven Gerard, Oceanside, CA 92056 (US); Chandler, Kelly Ann, San Marcos, CA 92078 (US)
(74) Representative: Muir, Benjamin M. J.

(56) References cited:
- EP-A- 0 999 215

## Description

### BACKGROUND OF THE INVENTION

The present invention is related to the field of low dielectric constant materials prepared by chemical vapor deposition (CVD) methods which serve as insulating layers in electronic devices. In particular, the present invention provides a method of purifying organosilicon compositions in preparation for their use as precursors to low dielectric constant materials to ensure a low concentration of certain impurities thereby reducing or eliminating process problems associated with precipitation of such impurities.

The electronics industry utilizes dielectric materials as insulating layers between circuits and components of integrated circuits (IC) and associated electronic devices. Line dimensions must be reduced in order to increase the speed and memory storage capability of microelectronic devices (e.g., computer chips). As the line dimensions decrease, the insulating requirements for the interlayer dielectric (ILD) become more rigorous. Shrinking dimensions requires a lower dielectric constant to minimize the RC time constant, where R is the resistance of the conductive line and C is the capacitance of the insulating dielectric layer. C is inversely proportional to spacing and proportional to the dielectric constant (k) of the ILD.

Conventional silica (SiO₂) CVD dielectric films produced from SiH₄ or TEOS (tetraethylorthosilicate) and oxygen have a dielectric constant (k) of greater than 4.0. There are several ways in which the industry has attempted to produce silica-based CVD films with lower dielectric constants, the most successful being the doping of the insulating film with carbon atoms, fluorine atoms, or organic groups containing carbon and fluorine. Doping the silica with carbon atoms or organic groups lowers the k of the resulting dielectric film for several reasons. Organic groups, such as methyl, are hydrophobic; thus, adding methyl or other organic groups to the composition can act to protect the resulting CVD deposited film from contamination with moisture. The incorporation of such organic groups also serves to "open up" the structure of the silica, possibly leading to lower density through space-filling with bulky CHₓ bonds. Organic groups are also useful because some functionality can be incorporated into the organosilicate glass (OSG), then subsequently "burned out" or oxidized to produce a more porous material which will inherently have a lower dielectric constant.

Carbon can be incorporated into an ILD by using an organosilane as the silicon source material in the PECVD reaction. An example of such would be the use of methylsilanes, (CH₃)ₓSiH₍₄₋ₓ₎, as disclosed in U.S. Pat. No. 6,054,379. Alkoxysilanes (silyl ethers) have also been disclosed as effective precursors for the introduction of organic moieties into the ILD. Particularly useful alkoxysilanes are disclosed in U.S. Pat. No 6,583,048. Of such alkoxysilanes, diethoxymethylsilane (DEMS) has found significant commercial use.

The manufacture of organosilanes such as, for example, alkoxysilanes typically requires the use of chlorosilane or organochlorosilane chemical starting materials. In such reactions, the alkoxy group replaces the chloride, forming the desired alkoxysilane. Dimethyldimethoxysilane (DMDMOS), for example, is commercially manufactured utilizing the chemical reaction of dimethyldichlorosilane with methanol as shown below:

(i) (CH₃)₂SiCl₂ + 2 CH₃OH **→** (CH₃)₂Si(OCH₃)₂ + 2 HCl

In a similar manner, diethoxymethylsilan (DEMS) is typically prepared primarily by one of two commercial syntheses: the "direct" synthesis, shown below by equation (ii), involving the reaction of dichloromethylsilane with ethanol; and the "orthoformate" synthesis, shown by equation (iii), which involves the reaction of dichloromethylsilane with triethylorthoformate:

(ii) CH₃SiCl₂H + 2 CH₃CH₂OH **→** CH₃Si(OCH₂CH₃)₂H + 2 HCl

(iii) CH₃SiCl₂H + 2 (CH₃CH₂O)₃CH → CH₃Si(OCH₂CH₃)₂H + 2 CH₃CH₂CI + 2 CH₃CH₂OC(O)H

In all of the above cases the synthesis of the desired alkoxysilane is accompanied by the production of stoichiometric quantities of chloride-containing byproducts such as hydrochloric acid (HCl), as in the case of the reactions (i) and (ii), or ethylchloride (CH₃CH₂Cl) as in the case of the latter reaction. The crude product mixture also typically contains some amount of unconverted chloromethylsilane. This is particularly true for the synthesis of DEMS, in which it is not practical to treat the dichloromethylsilane starting material with a substantial molar excess of reactant in order to drive the reaction to quantitative conversion. The presence of Si-H in the dichloromethylsilane makes it particularly vulnerable to attack forming undesirable side-reaction products if exposed to a substantial excess of either ethanol (CH₃CH₂OH) or triethylorthoformate ((CH₃CH₂O)₃CH). Given these constraints, the crude DEMS product typically has a significant amount of acid chlorides (HCI) and/or complexed silicon chloride impurities. Distillation is effective for removing most of the chloride impurities, but has limited efficacy for reducing the chlorides to the low levels required for CVD precursor source chemicals *(e.g.,* <10 ppm by weight). In order to achieve these low chloride levels the product can be treated (i.e., contacted) with a basic chloride scavenger which will remove the chloride through complexation or adsorption. The basic chloride scavenger can be in the form of a pure liquid or solid, such as in the case of an organoamine, or in the form of a resin material such as in a packed bed of solid adsorbent material.

There are significant drawbacks, however, associated with the use of residual chloride scavengers. For example, during CVD processing it is not uncommon that different lots of organosilicon precursor such as, for example, DEMS, may be combined, such as when a partially empty container is back-filled with a second source container of precursor, or when two different precursor source containers are feeding a common manifold. Precipitation of solids may occur if a sample of precursor containing a substantial amount of dissolved residual chloride is combined with a second source of precursor containing a substantial amount of dissolved residual basic scavenger. Solids formation in this manner leads to production problems because the solid precipitate typically restricts or blocks the flow of the liquid precursor, contaminates the liquid delivery or deposition hardware, and numerous potential performance and or quality issues associated with the deposited low-k films. Thus, it is equally important to ensure that the final product is substantially free of residual basic chloride scavenger especially those that contain nitrogen.

The level of the residual basic chloride scavenger and hence the amount of residual nitrogen can be controlled by carefully adding a stoichiometric amount of basic chloride scavenger to the chloride-containing organosilicon such that the basic chloride scavenger is quantitatively consumed by the available chloride through the formation of the corresponding chloride salt, thereby leaving behind no unreacted excess basic chloride scavenger to contaminate the final product. This method, however, is problematic because it requires careful dosing of the basic scavenger, the amount of which is dependent on the specific chloride content of the particular batch being treated. This method also requires assumptions to be made about the stoichiometry of the chloride salts being formed, all of which complicate the process by introducing multiple potential sources of error which may result in an inferior quality product and/or a less robust synthesis process.

Another method employed in the art to reduce the level of the residual basic chloride scavenger is to contact the organosilicon product with a stationary scavenger such as, for example, a solid resin or a supported material in which there is no free unused scavenger component that can remain behind in the product. This method however is not particularly well-suited for removing halogen-containing impurities from organosilicon products such as, for example, those comprising DEMS, because the basic adsorbent materials used in these processes tend to have some inherent chemical reactivity towards DEMS, either directly attacking the Si-H bond leading to some amount of degradation, or acting as a basic catalyst causing the decomposition of DEMS to form methyltriethoxysilane (MTES) and ethoxymethylsilane (EMS) according to the reaction below:

(iv) 2 CH₃Si(OCH₂CH₃)₂H → CH₃Si(OCH₂CH₃)₃ + CH₃Si(OCH₂CH₃)H₂

Moreover, such solid materials typically include contaminants that may leach from the solid adsorbent or resin material, which may have a detrimental impact on the quality of the DEMS material if not removed.

Accordingly, there is a need in the art for a method of providing an organosilicon composition that allows for the convenience of employing a basic chloride scavenger and yet is capable of readily reducing the levels of basic chloride scavenger to yield a final purified product that has a significantly reduced potential to precipitate chloride salts upon mixture with another organosilicon material.

### BRIEF SUMMARY OF THE INVENTION

The present invention satisfies the need for a method of providing an organosilicon composition that is convenient and is capable of readily reducing the levels of basic chloride scavenger to yield a final purified product that has a significantly reduced potential to precipitate chloride salts upon mixture with another organosilicon material. The present invention satisfies this need by providing a method for purifying an organosilicon composition comprising an alkoxysilane or a carboxysilane and a basic impurity, the method comprising the steps of: contacting the organosilicon composition with an acid gas to form a precipitate comprising a salt of the acid gas upon reaction with the basic impurity; and removing the salt of the acid gas to form a purified organosilicon product.

In another aspect, the present invention provides a method for purifying an organosilicon composition comprising an alkoxysilane and dissolved residual chloride, the method comprising the steps of: contacting the organosilicon composition with a stoichiometric excess of a basic chloride scavenger to cause at least a portion of the dissolved residual chloride to precipitate as a chloride salt; removing the precipitated chloride salt from the organosilicon composition; contacting the organosilicon composition with an acid gas to form a precipitate comprising a salt of the acid gas upon reaction with the excess basic chloride scavenger; and removing the salt of the acid gas to form a purified organosilicon product.

In yet another aspect, the present invention provides a method for making a purified organosilicon product comprising diethoxymethylsilane and a basic impurity, the method comprising the steps of: contacting the organosilicon product with carbon dioxide gas to form a carbonate salt precipitate upon reaction with the basic impurity; and removing the carbonate salt precipitate to form the purified organosilicon product.

The use of basic chloride scavengers to remove chloride followed by contact with an acid gas such as, for example, CO₂, to remove the basic chloride scavenger is very effective to minimize impurities and does not promote the decomposition of DEMS to MTES and EMS as is the case with many supported adsorbent materials.

### BRIEF DESCRIPTION OF SEVERAL VIEWS OF THE DRAWINGS

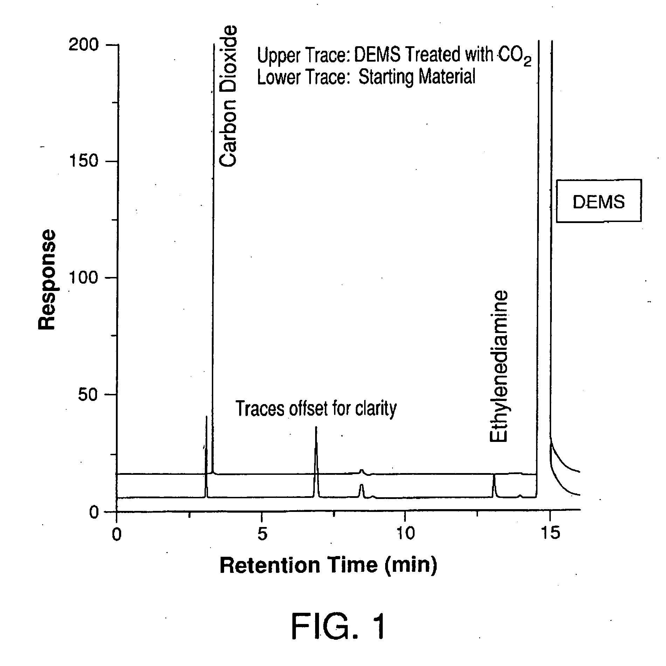

Figure 1 is a comparative chromatogram that illustrates the effect of the present invention.

### DETAILED DESCRIPTION OF THE INVENTION

The present invention provides a method for making a purified organosilicon product from an organosilicon composition comprising undesired dissolved residual chloride. The method comprises the steps of: contacting the organosilicon composition with a stoichiometric excess of a basic chloride scavenger to cause at least a portion of the dissolved residual chloride to precipitate as a chloride salt; removing the precipitated chloride salt from the organosilicon composition; contacting the organosilicon composition with an acid gas to form a precipitate comprising a salt of the acid gas upon reaction with the excess basic chloride scavenger; and removing the salt of the acid gas to form a purified organosilicon product.

Organosilicon compositions according to the present invention include those organosilicons whose manufacture may employ chlorosilane or organochlorosilane chemical staring materials (i.e., reactants). When such starting materials are employed, the synthesis is typically accompanied by stoichiometric quantities of chloride-containing byproducts that need to be removed to purify the organosilicon product for its intended use. The organosilicon compositions according to the present invention are typically employed as organosilicon precursors for use in making interlayer dielectric (ILD) films having a dielectric constant of 3.5 or less and, preferably, 3 or less, by chemical vapor deposition (CVD) such as, for example, plasma enhanced CVD (PECVD) or thermal CVD. Preferred orgaonosilicons according to the present invention include at least one selected from the group consisting of alkoxysilanes and carboxysilanes.

In preferred embodiments of the present invention, the alkoxysilane is a compound of the formula R¹ₙ(R²O)₃₋ₙSiH where: R¹ can be independently H, C₁ to C₁₀, linear or branched, saturated, singly or multiply unsaturated, cyclic, partially or fully fluorinated; R² can be independently C₁ to C₁₀, linear or branched, saturated, singly or multiply unsaturated, cyclic, aromatic, partially or fully fluorinated; and n is 0, 1, or 2. Examples of such alkoxysilanes include diethoxymethylsilane, methyldimethoxysilane, dimethoxymethylsilane, di-isopropoxymethylsilane, di-tertiarybutoxymethylsilane, triethoxysilane, dimethylmethoxysilane, dimethylethoxysilane, di-tertiarybutylethoxysilane, and mixtures thereof.

In another preferred embodiment of the present invention, the alkoxysilane is a compound of the formula R¹ₙ(R²O)₂₋ₙHSi-O-SiHR³ₘ(OR⁴)₂₋ₘ where: R¹ and R³ can be independently H, C₁ to C₁₀, linear or branched, saturated, singly or multiply unsaturated, cyclic, partially or fully fluorinated; R² and R⁴ can be independently C₁ to C₁₀, linear or branched, saturated, singly or multiply unsaturated, cyclic, aromatic, partially or fully fluorinated; n is 0 or 1 and m is 0, 1 or 2. 1,3-dimethyl-1,3-diethoxydisiloxane is an example of such alkoxysilane.

In yet another embodiment of the present invention, the alkoxysilane is a compound of the formula R¹ₙ(R²O)₂₋ₙHSi-SiHR³ₘ(OR⁴)₂₋ₘ where: R¹ and R³ can be independently H, C₁ to C₁₀, linear or branched, saturated, singly or multiply unsaturated, cyclic, partially or fully fluorinated; R² and R⁴ can be independently C₁ to C₁₀, linear or branched, saturated, singly or multiply unsaturated, cyclic, aromatic, partially or fully fluorinated; n is 0 or 1 and m is 0, 1 or 2. 1,2-dimethyl-1,2-diethoxydisilane is an example of such alkoxysilane.

In yet another embodiment of the present invention, the alkoxysilane is a compound of the formula R¹ₙ(R²O)₂₋ₙHSi-R⁵-SiHR³ₘ(OR⁴)₂₋ₘ where: R¹ and R³ can be independently H, C₁ to C₁₀, linear or branched, saturated, singly or multiply unsaturated, cyclic, partially or fully fluorinated; R² and R⁴ can be independently C₁ to C₁₀, linear or branched, saturated, singly or multiply unsaturated, cyclic, aromatic, partially or fully fluorinated; R⁵ can be independently C₁ to C₁₀, linear or branched, saturated, singly or multiply unsaturated, cyclic, partially or fully fluorinated; and n is 0 or 1 and m is 0, 1 or 2. Examples include: 1,3-dimethyl-1,3-diethoxydisilamethane and 1,3-diethyl-1,3-diethoxydisilamethane.

Preferred alkoxysilanes are, for example, those disclosed in U.S. Patent No. 6,583,048, as well as alkoxysilane dimers and oligomers. Diethoxymethylsilane is the most preferred alkoxysilane.

Preferred orgaonosilicons according to the present invention also include carboxysilanes. For example, the carboxysilane can be a compound of the formula R¹ₙ(R²C(O)O)₃₋ₙSiH where: R¹ can be independently H, C₁ to C₁₀, linear or branched, saturated, singly or multiply unsaturated, cyclic, partially or fully fluorinated; R² can be independently H, C₁ to C₁₀, linear or branched, saturated, singly or multiply unsaturated, cyclic, aromatic, partially or fully fluorinated; and n is 0, 1, or 2. Methyldiacetoxysilane is an example of such carboxysilane.

In another embodiment of the present invention, the carboxysilane is a compound of the formula R¹ₙ(R²C(O)O)₂₋ₙHSi-O-SiHR³ₘ(O(O)CR⁴)₂₋ₘ where: R¹ and R³ can be independently H, C₁ to C₁₀, linear or branched, saturated, singly or multiply unsaturated, cyclic, partially or fully fluorinated; R² and R⁴ can be independently H, C₁ to C₁₀, linear or branched, saturated, singly or multiply unsaturated, cyclic, aromatic, partially or fully fluorinated; n is 0 or 1 and m is 0, 1 or 2. 1,3-dimethyl-1,3-diacetoxydisiloxane is an example of such carboxysilane.

In another embodiment of the present invention, the carboxysilane is a compound of the formula R¹ₙ(R²C(O)O)₂₋ₙHSi-SiHR³ₘ(O(O)CR⁴)₂₋ₘ where: R¹ and R³ can be independently H, C₁ to C₁₀, linear or branched, saturated, singly or multiply unsaturated, cyclic, partially or fully fluorinated; R² and R⁴ can be independently H, C₁ to C₁₀, linear or branched, saturated, singly or multiply unsaturated, cyclic, aromatic, partially or fully fluorinated; n is 0 or 1 and m is 0, 1 or 2. 1,2-dimethyl-1,2-diacetoxydisilane is an example of such carboxysilane.

In yet another embodiment of the present invention, the carboxysilane is a compound of the formula R¹ₙ(R²C(O)O₂₋ₙHSi-R⁵-SiHR³ₘ(O(O)CR⁴)₂₋ₘ where: R¹ and R³ can be independently H, C₁ to C₁₀, linear or branched, saturated, singly or multiply unsaturated, cyclic, partially or fully fluorinated; R² and R⁴ can be independently H, C₁ to C₁₀, linear or branched, saturated, singly or multiply unsaturated, cyclic, aromatic, partially or fully fluorinated; R⁵ can be independently C₁ to C₁₀, linear or branched, saturated, singly or multiply unsaturated, cyclic, partially or fully fluorinated; and n is 0 or 1 and m is 0, 1 or 2. Examples include 1,3-dimethyl-1,3-dipropionoxydisilamethane and 1,3-diethyl-1 ,3-diacetoxydisilamethane.

Organosilicon compositions according to the present invention typically comprise a concentration of dissolved residual chloride because alkoxysilanes such as, for example, DEMS, are typically synthesized from chlorosilanes by the reaction with the appropriate alcohol to form the desired alkoxysilane. This synthetic approach also produces hydrogen chloride as a stoichiometric byproduct. The alkoxysilane composition is typically purified by removal of hydrogen chloride and residual chlorosilanes from the synthesis process. The majority of the hydrogen chloride can be removed from the crude alkoxysilane composition through distillation resulting in an alkoxysilane with 25-2000 ppm chloride by weight. Thus, further processing is typically required to further reduce the dissolved residual chloride.

Accordingly, in preferred embodiments, the method of the present invention includes the step of contacting the organosilicon composition with a stoichiometric excess of a basic chloride scavenger to cause at least a portion of the dissolved residual chloride to precipitate as a chloride salt. As used herein, the term "basic chloride scavenger" refers to a chemical substance which has a free pair of electrons available to bind a hydrogen ion, that would therefore act as a "scavenger" by binding with the dissolved chloride as hydrogen chloride, thus forming a solid salt precipitate. The term "basic impurity" as used herein refers to the presence of the basic chloride scavenger in the composition that is in excess of the amount of basic chloride scavenger needed to remove the dissolved residual chloride to the levels required for use, for example, as a precursor in a chemical vapor deposition process.

The prior art is replete with a variety of purification techniques that employ basic chloride scavengers to further lower the concentration of dissolved residual chloride. One such method is disclosed in EP 282486 A2 and EP 741137 A1 and involves neutralization with alkali metal alcoholates, followed by separation of the resulting salt. The use of ammonia and alcoholates to neutralize excess acid halides is disclosed in U.S. Pat. Nos. 6,150,552 and 6,242,628. Alkali-treated activated carbons and basic ion exchange resins have also been used to remove trace chloride from alkoxysilanes (Chem. Abstracts, Vol. 117 (1992); p. 713, 2515554). The use of activated carbons to scavenge residual halogen from alkoxysilane based materials is disclosed in U.S. Pat. No. 6,100,418. Various other approaches to reduce the acid halide content of alkoxysilanes have been disclosed, such as U.S. Pat. No. 5,084,588, involving the use of metal salts to neutralize the acid halide. U.S. Pat. No. 5,210,254 describes the addition of metal alkoxide species to neutralize the acid halide. The use of alkali metal salts, such as amides, imides, oxazolidinones, amines and sulfonamides, is proposed for removing acidic halides from organosilane compounds in U.S. Pat. Appl. Pub. No. US2005/0059835.

Preferred basic chloride scavengers suitable for use in the method of the present invention include ammonia, amine compounds, alcoholates, metal alkoxides, alkali metal salts, tetraethylene glycol di(2-ethylhexoate), metal salts of organic acids, epoxide-containing compounds, and mixtures thereof. Preferred epoxide-containing compounds include, for example, epoxidized linseed oil, epoxidized soybean oil, epoxidized α-olefins, epoxidized esters, glycidyl ethers, and mixtures thereof. In certain embodiments, the basic chloride scavenger is an alkali metal salt of an amide, an imide, an oxazolidinone, or a sulfonamide. In other embodiments, the basic chloride scavenger comprises an a salt of an organic acid such as, for example, sodium citrate.

In more preferred embodiments of the present invention, the basic chloride scavenger is ammonia or an amine. Preferred amines suitable for use in the method of the present invention include ammonia, urea, ethylenediamine (EDA), diethylenetriamine (DETA), triethylenetetramine (TETA), pyridine, triethylenediamine (TEDA), diethanolamine (DELA), triethanolamine (TELA), aminopropyldiethanolamine (APDEA), bis(p-aminocyclohexyl)methane (PACM), quinuclidine (QUIN), 3-Quinuclidinol, trimethylamine (TMA), tetramethylethylendiamine (TMEDA), tetramethyl-1,3-propanediamine (TMPDA), trimethylamine oxide (TMAO), N,N,N-tris(N',N'-dimethyl-3-aminopropyl)amine, 3,3'-bis(dimethylamino)-N-methyldipropylamine, choline hydroxide, 4-dimethylaminopyridine (DMAP), diphenylamine (DPA), tetraethylenepentamine (TEPA), and mixtures thereof. In the most preferred embodiments of the present invention, the basic chloride scavenger is ethylenediame, urea, ammonia, or mixtures thereof.

The step of contacting the organosilicon composition with a stoichiometric excess of a basic chloride scavenger to cause at least a portion of the dissolved residual chloride to precipitate as a chloride salt can be carried out by any method known to those of ordinary skill in the art to effect a contact between the dissolved residual chloride and the basic chloride scavenger such that a reaction occurs to form the chloride salt precipitate. Examples of such methods include an in-situ chloride scavenger process wherein the basic chloride scavenger is present during the synthesis step, and as such is able to scavenge the chloride or hydrogen chloride through the precipitation of the corresponding chloride salt as it is produced during synthesis. This method has the additional potential benefit of facilitating the forward step of the synthesis reaction by driving the equilibrium to the right in favor of increased product formation through the rapid removal of one of the reaction products. Once the synthesis is complete the mixture is typically heated and/or agitated/mixed to ensure the quantitative precipitation of the dissolved chloride. The chloride salt precipitate thus formed subsequently can be removed by any one of a variety of solids separation techniques such as, for example, filtration, decantation, centrifugation, or combinations of such techniques. Another method commonly practiced by those of ordinary skill in the art is to employ the basic chloride scavenger in a separate step after the completion of the primary synthesis reaction. In this case the initial synthesis mixture is typically contacted with the basic chloride scavenger in a separate step following the synthesis reaction, again for the purpose of removing the dissolved chloride from the desired product by forcing its precipitation as the chloride salt. The mixture would then be subjected to agitation/mixing for an appropriate length of time to ensure the complete precipitation of the chloride salt. The chloride salt precipitate thus formed subsequently can be removed by any one of a variety of solids separation techniques such as filtration, decantation, centrifugation, or combinations of such techniques.

In preferred embodiments, the method of the present invention also includes the step of removing the precipitated chloride salt. This scavenger-chloride salt can be removed and separated from the organosilicon material from which it was precipitated by conventional means such as filtration, further distillation, decantation, centrifugation, or any mixture of these processes.

Because of the need to remove dissolved residual chloride from alkoxysilanes such as, for example, DEMS, the compositions of the present invention comprise a concentration of dissolved basic chloride scavenger after the chloride salt precipitate is formed and removed. Since basic chloride scavengers can be difficult to remove after addition to the dissolved chloride-containing material, low levels of basic chloride scavengers often remain dissolved in solution as a "basic impurity".

Accordingly, the method of the present invention includes the step of contacting the organosilicon composition with an acid gas to form a precipitate comprising a salt of the acid gas upon reaction with the basic impurity. As used herein, the term "acid gas" refers to a gas that can form acidic solutions when mixed with water. Examples of acid gases for use according to the present invention include carbon dioxide (CO₂), hydrogen sulfide (H₂S), nitrous oxide (N₂O), nitric oxide (NO), dinitrogen trioxide (N₂O₃), nitrogen dioxide (NO₂), dinitrogen tetroxide (N₂O₄), dinitrogen pentoxide (N₂O₅), sulfur dioxide (SO₂), sulfur trioxide (SO₃), and mixtures thereof. Carbon dioxide (CO₂) is the most preferred acid gas for use in the method of the present invention.

The step of contacting the organosilicon composition with an acid gas to form a precipitate comprising a salt of the acid gas can be carried out by any means known to those of ordinary skill in the art that will ensure a reaction between at least a portion of the basic chloride scavenger solution and the acid gas to form the corresponding insoluble salt (e.g., a carbonate salt when the acid gas is carbon dioxide). Such means include bubbling the acid gas from the bottom of a reactor or other vessel while the organosilicon composition is being agitated so that a high level of contact between the acid gas and the basic chloride scavenger is achieved.

The method of the present invention also includes the step of removing the salt of the acid gas to form a purified organosilicon product. The salt of the acid gas can be removed, i.e., separated from the organosilicon material from which it was precipitated, by conventional means such as filtration, further distillation, decantation, centrifugation, or any mixture of these processes, in order to produce the organosilicon product.

In preferred embodiments, the method of the present invention includes the step of contacting the purified organosilicon product with an inert gas. Preferably, the inert gas is a gas selected from the group consisting of helium, nitrogen, argon, and mixtures thereof. Most preferably, the inert gas is helium or nitrogen. Preferably, the step of contacting the purified organosilicon product with an inert gas displaces any residual acid gas that remains in the purified organosilicon product such that the purified organosilicon product is substantially free of dissolved chlorides, dissolved basic scavengers and dissolved acid gas such that it is suitable for use as a source material for the manufacture of low dielectric constant materials for integrated circuits. As used herein, the phrase "substantially free of dissolved chlorides, dissolved basic scavengers and dissolved acid gas" means that the concentration of each respective component is preferably less than 10 parts per million by weight, more preferably less than 5 parts per million by weight, and most preferably less than 2 parts per million by weight.

In certain embodiments of the present invention, the step of contacting the purified organosilicon product with an inert gas may also include subjecting the purified organosilicon composition to a vacuum followed by repressurizing with the inert gas. This may be performed as many times as necessary to ensure removal of the dissolved acid gas.

The method described herein allows the an organosilicon composition such as, for example, an organosilicon composition comprising DEMS, to be treated (i.e, contacted) with an excess of basic chloride scavenger to ensure optimal removal of chlorides. The basic chloride scavenger itself can then be subsequently removed by contact with an excess of an acid gas such as, for example, CO₂, causing the precipitation of the corresponding carbonate salt. Any residual dissolved acid gas is subsequently removed cleanly by purging the composition with an inert gas such as, e.g., Ar, N₂ or He, to produce the finished product which is substantially free of chlorides, nitrogen-containing scavengers and acid gas, and hence is suitable for use as a source material for the manufacture of low dielectric constant materials for integrated circuits.

Additional objects, advantages, and novel features of this invention will become apparent to those skilled in the art upon examination of the following examples thereof, which are not intended to be limiting.

### EXAMPLES

### EXAMPLE 1

A 16 L sample of diethoxymethylsilane (DEMS) was analyzed by gas chromatography to contain 368 ppm of ethylenediamine (EDA). EDA had been used as a scavenger to remove the residual chloride following the synthesis of the DEMS. The residual EDA in the sample was present because a stoichiometric excess had been used to ensure optimal removal of the chloride species. The 16 L sample was transferred into a 20 L flask under inert gas conditions. The DEMS liquid was flooded with CO₂ gas for 90 minutes at a rate of about 2 to 3 liters per minute. An immediate precipitation of a milky white solid was observed upon the initial contact of CO₂ with the DEMS liquid. The 20 L flask was purged with N₂ gas to establish an inert atmosphere in the headspace above the liquid. The following day the solid was separated from the DEMS liquid by filtering the product through a 0.2 micron filter under inert gas conditions. The filtered liquid was evacuated, then back-filled with ambient pressure N₂. This step was repeated 2 more times to remove the dissolved CO₂ from the DEMS. Gas chromatography data comparing the DEMS before and after the CO₂ contact are shown in Figure 1. Note that there is no EDA peak evident in the chromatogram of the sample that was contacted with CO₂. The EDA concentration dropped from an initial value of 368 ppm to <2 ppm EDA after the CO₂ contact. There is some CO₂ evident in this sample since the GC analysis shown in Figure 1 was performed prior to the N₂ evacuation/back-fill step to remove the CO₂. Similar GC analysis of the N₂ treated sample showed no CO₂ present in the final sample. The data are summarized in Table 1.

### EXAMPLE 2

A 31 L (26 kg) sample of DEMS containing 28 ppm of EDA was placed in a 20 L flask. The DEMS was flooded with CO₂, filtered, and then flooded with N₂ gas in a manner similar to that described in the previous example. The final product had an undetectable amount of EDA (< 2 ppm) as analyzed by GC. The data are summarized in Table 1.

### EXAMPLE 3

A 100g sample of DEMS containing 573 ppm of EDA was transferred to a 500 ml quartz bubbler. The bubbler was equipped with inlet and outlet lines to allow gas purging. The inlet line consisted of a dip-tube that dropped to within 1/8" (0.3 cm) of the base of the bubbler. The bubbler was removed from the dry box and placed on a lab bench-top in a ventilated hood. The DEMS solution was purged with 300 sccm of CO₂ for 60 minutes. A cloudy precipitate was immediately evident upon initial contact of the CO₂ with the DEMS solution. The treated solution was allowed to sit overnight, resulting in a slightly opaque solution with a white precipitate at the bottom. The solid was removed by passing the solution through a 0.20 micrometer syringe filter. The filtered solution was placed into a clean bubbler. The bubbler was briefly evacuated for 10-15 seconds, followed by refilling with ambient pressure nitrogen. This evacuation-refill procedure was repeated a second time to ensure optimal CO₂ removal.

Small samples of the DEMS solution were set aside for EDA analysis as follows: (1) original DEMS that contained residual EDA; and (2) DEMS after CO₂ contact. Table 1 shows the EDA concentration of these samples. The original DEMS had 573 ppm EDA. The EDA level dropped about 100-fold to 5.4 ppm after the CO₂ flooding.

**Table 1: Comparison of EDA concentration for CO₂ treatment of DEMS Before and After CO₂ Treatment.**

| Example No. | organosilane | EDA concentration (ppm) | | |
|---|---|---|---|---|
| | | initial | after EDA spike | after CO₂ treatment |
| 1 | DEMS | 368 | N.A. | < 2 |
| 2 | DEMS | 28 | N.A. | < 2 |
| 3 | DEMS | 573 | N.A. | 5.4 |

The foregoing examples and description of the preferred embodiments should be taken as illustrating, rather than as limiting the present invention as defined by the claims. As will be readily appreciated, numerous variations and combinations of the features set forth above can be utilized without departing from the present invention as set forth in the claims.

## Claims

1. A method for purifying an organosilicon composition, the method comprising the steps of:
contacting an organosilicon composition, comprising an alkoxysilane or a carboxysilane and a basic impurity, with an acid gas to form a precipitate comprising a salt of the acid gas upon reaction with the basic impurity; and
removing the salt of the acid gas to form a purified organosilicon product.

2. The method of Claim 1 wherein the organosilicon composition comprises an alkoxysilane.

3. The method of Claim 2 wherein the basic impurity is a basic chloride scavenger, the method comprising the steps of:
contacting an organosilicon composition, comprising an alkoxysilane and dissolved residual chloride, with a stoichiometric excess of a basic chloride scavenger to cause at least a portion of the dissolved residual chloride to precipitate as a chloride salt;
removing the precipitated chloride salt from the organosilicon composition;
contacting the resulting organosilicon composition, comprising an alkoxysilane and excess basic chloride scavenger, with an acid gas to form a precipitate comprising a salt of the acid gas upon reaction with the excess basic chloride scavenger; and
removing the salt of the acid gas to form a purified organosilicon product.

4. The method of Claim 2 or 3 wherein the alkoxysilane is selected from the group consisting of:
a compound of the formula R¹(R²O)₃₋ₙSiH where: R¹ can be independently H, C₁ to C₁₀, linear or branched, saturated, singly or multiply unsaturated, cyclic, partially or fully fluorinated; R² can be independently C₁ to C₁₀, linear or branched, saturated, singly or multiply unsaturated, cyclic, aromatic, partially or fully fluorinated; and n is 0, 1, or 2;
a compound of the formula R¹ₙ(R²O)₂₋ₙHSi-O-SiHR³ₘ(OR⁴)₂₋ₘ where: R¹ and R³ can be independently H, C₁ to C₁₀, linear or branched, saturated, singly or multiply unsaturated, cyclic, partially or fully fluorinated; R² and R⁴ can be independently C₁ to C₁₀, linear or branched, saturated, singly or multiply unsaturated, cyclic, aromatic, partially or fully fluorinated; and n is 0 or 1 and m is 0, 1 or 2;
is a compound of the formula R¹ₙ(R²O)₂₋ₙHSi-SiHR³ₘ(OR⁴)₂₋ₘ where: R¹ and R³ can be independently H, C₁ to C₁₀, linear or branched, saturated, singly or multiply unsaturated, cyclic, partially or fully fluorinated; R² and R⁴ can be independently C₁ to C₁₀, linear or branched, saturated, singly or multiply unsaturated, cyclic, aromatic, partially or fully fluorinated; and n is 0 or 1 and m is 0, 1 or 2; and
a compound of the formula R¹ₙ(R²O)₂₋ₙHSi-R⁵-SiHR³ ₘ(OR⁴)₂₋ₘ where: R¹ and R³ can be independently H, C₁ to C₁₀, linear or branched, saturated, singly or multiply unsaturated, cyclic, partially or fully fluorinated; R² and R⁴ can be independently C₁ to C₁₀, linear or branched, saturated, singly or multiply unsaturated, cyclic, aromatic, partially or fully fluorinated; R⁵ can be independently C₁ to C₁₀, linear or branched, saturate, singly or multiply unsaturated, cyclic, partially or fully fluorinated; and n is 0 or 1 and m is 0, 1 or 2.

5. The method of Claim 4 wherein the alkoxysilane is diethoxymethylsilane.

6. The method of Claim 1 wherein the organosilicon composition comprises an carboxysilane.

7. The of Claim 6 wherein the carboxysilane is selected from the group consisting of:
a compound of the formula R¹ₙ(R²C(O)O)₃₋ₙSiH where: R¹ can be independently H, C₁ to C₁₀, linear or branched, saturated, singly or multiply unsaturated, cyclic, partially or fully fluorinated; R² can be independently H, C₁ to C₁₀, linear or branched, saturated, singly or multiply unsaturated, cyclic, aromatic, partially or fully fluorinated; and n is 0, 1, or 2;
a compound of the formula R¹ₙ(R²C(O)O₂₋ₙHSi-O-SiHR³ₘ(O(O)CR⁴)₂₋ₘ where R¹ and R³ can be independently H, C₁ to C₁₀, linear or branched, saturated, singly or multiply unsaturated, cyclic, partially or fully fluorinated; R² and R⁴ can be independently H, C₁ to C₁₀, linear or branched, saturated, singly or multiply unsaturated, cyclic, aromatic, partially or fully fluorinated; and n is 0 or 1 and m is 0, 1 or 2;
a compound of the formula R¹ₙ(R²C(O)O)₂₋ₙHSi-SiHR³ₘ(O(O)CR⁴)₂₋ₘ where: R¹ and R³ can be independently H, C₁ to C₁₀, linear or branched, saturated, singly or multiply unsaturated, cyclic, partially or fully fluorinated; R² and R⁴can be independently H, C₁ to C₁₀, linear or branched, saturated, singly or multiply unsaturated, cyclic, aromatic, partially or fully fluorinated;and n is 0 or 1 and m is 0, 1 or 2; and
a compound of the formula R¹ₙ(R²C(O)O)₂₋ₙHSi-R⁵-SiHR³ₘ(O(O)CR⁴)₂₋ₘ where: R¹ and R³can be independently H, C₁ to C₁₀, linear or branched, saturated, singly or multiply unsaturated, cyclic, partially or fully fluorinated; R² and R⁴ can be independently H, C₁ to C₁₀, linear or branched, saturated, singly or multiply unsaturated, cyclic, aromatic, partially or fully fluorinated; R⁵ can be independently C₁ to C₁₀, linear or branched, saturated, singly or multiply unsaturated, cyclic, partially or fully fluorinated; and n is 0 or 1 and m is 0, 1 or 2.

8. The method of any preceding claim wherein the basic impurity is selected from the group consisting of: ammonia, urea, ethylenediamine, diethylenetriamine, triethylenetetramine, pyridine, triethylenediamine, diethanolamine, triethanolamine, aminopropyldiethanolamine, bis(p-aminocyclohexyl)methane, quinuclidine, 3-Quinuclidinol, trimethylamine, tetramethylethylendiamine, tetramethyl-1,3-propanediamine, trimethylamine oxide, N,N,N-tris(N',N'-dimethyl-3-aminopropyl)amine, 3,3'-bis(dimethylamino)-N-methyldipropylamine, choline hydroxide, 4-dimethylaminopyridine, diphenylamine, tetraethylenepentamine, and mixtures thereof.

9. The method of Claim 8 wherein the basic impurity is selected from the group consisting of: ammonia, urea, ethylenediamine, and mixtures thereof.

10. The method of any preceding claim wherein the acid gas is carbon dioxide.

11. The method of any preceding claim further comprising the step of contacting the purified organosilicon product with an inert gas.

12. The method of any preceding claim wherein the removing step(s) comprise a filtration process.

## Patentansprüche

1. Verfahren zur Reinigung einer Organosiliciumzusammensetzung, wobei das Verfahren die folgenden Schritte umfasst:
Zusammenbringen einer Organosiliciumzusammensetzung, die ein Alkoxysilan oder ein Carboxysilan und eine basische Verunreinigung einschließt, mit einem sauren Gas, wobei durch Reaktion mit der basischen Verunreinigung ein Niederschlag gebildet wird, der ein Salz des sauren Gases einschließt,; und
Entfernen des Salzes des sauren Gases, wodurch ein gereinigtes Organosiliciumprodukt gebildet wird.

2. Verfahren nach Anspruch 1, wobei die Organosiliciumzusammensetzung ein Alkoxysilan einschließt.

3. Verfahren nach Anspruch 2, wobei die basische Verunreinigung ein basischer Chloridfänger ist, wobei das Verfahren die folgenden Schritte einschließt:
Zusammenbringen einer Organosiliciumzusammensetzung, die ein Alkoxysilan und gelöstes Restchlorid einschließt, mit einem stöchiometrischen Überschuss eines basischen Chloridfängers, wodurch bewirkt wird, dass wenigstens ein Teil des gelösten Restchlorids als ein Chloridsalz ausfällt;
Entfernen des ausgefällten Chloridsalzes aus der Organosiliciumzusammensetzung;
Zusammenbringen der resultierenden Organosiliciumzusammensetzung, die ein Alkoxysilan und überschüssigen basischen Chloridfänger einschließt, mit einem sauren Gas, wobei durch Reaktion mit dem überschüssigen basischen Chloridfänger ein Niederschlag gebildet wird, der ein Salz des sauren Gases einschließt; und
Entfernen des Salzes des sauren Gases, um ein gereinigtes Organosiliciumprodukt zu bilden.

4. Verfahren nach Anspruch 2 oder 3, wobei das Alkoxysilan aus der Gruppe ausgewählt ist, bestehend aus:
einer Verbindung der Formel R¹ₙ(R²O)₃₋ₙSiH, wobei: R¹ unabhängig H, C₁ bis C₁₀, linear oder verzweigt, gesättigt, einfach oder mehrfach ungesättigt, cyclisch, teilweise oder vollständig fluoriert, sein kann; R² unabhängig C₁ bis C₁₀, linear oder verzweigt, gesättigt, einfach oder mehrfach ungesättigt, cyclisch, aromatisch, teilweise oder vollständig fluoriert, sein kann; und n 0, 1 oder 2 ist;
einer Verbindung der Formel R¹ₙ(R²O)₂₋ₙHSi-O-SiHR³ₘ(OR⁴)₂₋ₘ, wobei R¹ und R³ unabhängig H, C₁ bis C₁₀, linear oder verzweigt, gesättigt, einfach oder mehrfach ungesättigt, cyclisch, teilweise oder vollständig fluoriert, sein können; R² und R⁴ unabhängig C₁ bis C₁₀, linear oder verzweigt, gesättigt, einfach oder mehrfach ungesättigt, cyclisch, aromatisch, teilweise oder vollständig fluoriert, sein können; und n 0 oder 1 ist und m 0, 1 oder 2 ist;
einer Verbindung der Formel R¹ₙ(R²O)₂₋ₙHSi-SiHR³ₘ(OR⁴)₂₋ₘ, wobei R¹ und R³ unabhängig H, C₁ bis C₁₀, linear oder verzweigt, gesättigt, einfach oder mehrfach ungesättigt, cyclisch, teilweise oder vollständig fluoriert, sein können; R² und R⁴ unabhängig C₁ bis C₁₀, linear oder verzweigt, gesättigt, einfach oder mehrfach ungesättigt, cyclisch, aromatisch, teilweise oder vollständig fluoriert, sein können; und n 0 oder 1 ist und m 0, 1 oder 2 ist; und
einer Verbindung der Formel R¹ₙ(R²O)₂₋ₙHSi-R⁵-SiHR³ₘ(OR⁴)₂₋ₘ, wobei R¹ und R³ unabhängig H, C₁ bis C₁₀, linear oder verzweigt, gesättigt, einfach oder mehrfach ungesättigt, cyclisch, teilweise oder vollständig fluoriert, sein können; R² und R⁴ unabhängig C₁ bis C₁₀, linear oder verzweigt, gesättigt, einfach oder mehrfach ungesättigt, cyclisch, aromatisch, teilweise oder vollständig fluoriert, sein können; R⁵ unabhängig C₁ bis C₁₀, linear oder verzweigt, gesättigt, einfach oder mehrfach ungesättigt, cyclisch, teilweise oder vollständig fluoriert, sein kann; und n 0 oder 1 ist und m 0, 1 oder 2 ist.

5. Verfahren nach Anspruch 4, wobei das Alkoxysilan Diethoxymethylsilan ist.

6. Verfahren nach Anspruch 1, wobei die Organosiliciumzusammensetzung ein Carboxysilan einschließt.

7. Verfahren nach Anspruch 6, wobei das Carboxysilan aus der Gruppe ausgewählt ist, bestehend aus:
einer Verbindung der Formel R¹ₙ(R²C(O)O)₃₋ₙSiH, wobei R¹ unabhängig H, C₁ bis C₁₀, linear oder verzweigt, gesättigt, einfach oder mehrfach ungesättigt, cyclisch, teilweise oder vollständig fluoriert, sein kann; R² unabhängig H, C₁ bis C₁₀, linear oder verzweigt, gesättigt, einfach oder mehrfach ungesättigt, cyclisch, aromatisch, teilweise oder vollständig fluoriert, sein kann; und n 0, 1 oder 2 ist;
einer Verbindung der Formel R¹ₙ(R²C(O)O)₂₋ₙHSi-O-SiHR³ₘ(O(O)CR⁴)₂₋ₘ, wobei R¹ und R³ unabhängig H, C₁ bis C₁₀, linear oder verzweigt, gesättigt, einfach oder mehrfach ungesättigt, cyclisch, teilweise oder vollständig fluoriert, sein können; R² und R⁴ unabhängig H, C₁ bis C₁₀, linear oder verzweigt, gesättigt, einfach oder mehrfach ungesättigt, cyclisch, aromatisch, teilweise oder vollständig fluoriert, sein können; und n 0 oder 1 ist und m 0, 1 oder 2 ist; und
einer Verbindung der Formel R¹ₙ(R²C(O)O)₂₋ₙHSi-SiHR³ₘ(O(O)CR⁴)₂₋ₘ, wobei R¹ und R³ unabhängig H, C₁ bis C₁₀, linear oder verzweigt, gesättigt, einfach oder mehrfach ungesättigt, cyclisch, teilweise oder vollständig fluoriert, sein können; R² und R⁴ unabhängig H, C₁ bis C₁₀, linear oder verzweigt, gesättigt, einfach oder mehrfach ungesättigt, cyclisch, aromatisch, teilweise oder vollständig fluoriert, sein können; und n 0 oder 1 ist und m 0, 1 oder 2 ist;
einer Verbindung der Formel R¹ₙ(R²C(O)O)₂₋ₙHSi- R⁵-SiHR³ₘ(O(O)CR⁴)₂₋ₘ, wobei R¹ und R³ unabhängig H, C₁ bis C₁₀, linear oder verzweigt, gesättigt, einfach oder mehrfach ungesättigt, cyclisch, teilweise oder vollständig fluoriert, sein können; R² und R⁴ unabhängig H, C₁ bis C₁₀, linear oder verzweigt, gesättigt, einfach oder mehrfach ungesättigt, cyclisch, aromatisch, teilweise oder vollständig fluoriert, sein können; R⁵ unabhängig C₁ bis C₁₀, linear oder verzweigt, gesättigt, einfach oder mehrfach ungesättigt, cyclisch, teilweise oder vollständig fluoriert, sein kann; und n 0 oder 1 ist und m 0, 1 oder 2 ist.

8. Verfahren nach einem vorhergehenden Anspruch, wobei die basische Verunreiningung aus der Gruppe ausgewählt ist, bestehend aus: Ammoniak, Harnstoff, Ethylendiamin, Diethylentriamin, Triethylentretramin, Pyridin, Triethylendiamin, Diethanolamin, Triethanolamin, Aminopropyldiethanolamin, Bis(p-aminocyclohexyl)methan, Chinuclidin, 3-Chinuclidinol, Trimethylamin, Tetramethylenethylendiamin, Tetramethyl-1,3-propandiamin, Triemethylaminoxid, N,N,N-Tris(N',N'-dimethyl-3-aminopropyl)amin, 3,3'-Bis(dimethylamino)-N-methyldipropylamin, Cholinhydroxid, 4-Dimethylaminopyridin, Diphenylamin, Tetraethylenpetanamin und Gemischen davon.

9. Verfahren nach Anspruch 8, wobei die basische Verunreinigung aus der Gruppe ausgewählt ist, bestehend aus Ammoniak, Harnstoff, Ethylendiamin und Gemischen davon.

10. Verfahren nach einem vorhergehenden Anspruch, wobei das saure Gas Kohlendioxid ist.

11. Verfahren nach einem vorhergehenden Anspruch, weiterhin umfassend den Schritt des Zusammenbringens des gereinigten Organosiliciumprodukts mit einem Inertgas.

12. Verfahren nach einem vorhergehenden Anspruch, wobei der (die) Entfernungsschritt(e) ein Filtrationsverfahren umfasst(en).

## Revendications

1. Procédé de purification d'une composition d'organosilicium, le procédé comprenant les étapes de :
mise d'une composition d'organosilicium, comprenant un alkoxysilane ou un carboxysilane et une impureté basique, en contact avec un gaz acide pour former un précipité comprenant un sel du gaz acide à la réaction avec l'impureté basique ; et
suppression du sel du gaz acide pour former un produit d'organosilicium purifié.

2. Procédé selon la revendication 1 dans lequel la composition d'organosilicium comprend un alkoxysilane.

3. Procédé selon la revendication 2 dans lequel l'impureté basique est un épurateur de chlorure basique, le procédé comprenant les étapes de :
mise d'une composition d'organosilicium, comprenant un alkoxysilane et un chlorure résiduel dissous, en contact avec un excès stoechiométrique d'un épurateur de chlorure basique pour faire en sorte qu'au moins une partie du chlorure résiduel dissous soit précipité sous la forme d'un sel chlorure ;
suppression du sel chlorure précipité de la composition d'organosilicium ;
mise de la composition d'organosilicium résultante, comprenant un alkoxysilane et un épurateur de chlorure basique en excès, en contact avec un gaz acide pour former un précipité comprenant un sel du gaz acide à la réaction avec l'épurateur de chlorure basique en excès ; et
suppression du sel du gaz acide pour former un produit d'organosilicium purifié.

4. Procédé selon la revendication 2 ou 3 dans lequel l'alkoxysilane est choisi parmi le groupe consistant en :
un composé de la formule R¹n (R²O) ₃₋ₙSiH où : R¹ peut être indépendamment un H, un C₁ à C₁₀, linéaire ou ramifié, saturé, insaturé de façon unique ou multiple, cyclique, partiellement ou totalement fluoré ; R² peut être indépendamment un C₁ à C₁₀, linéaire ou ramifié, saturé, insaturé de façon unique ou multiple, cyclique, aromatique, partiellement ou totalement fluoré ; et n est 0, 1, ou 2 ;
un composé de la formule R¹ₙ (R²O) ₂₋ₙHSi-O-SiHR³ₘ (OR⁴) ₂₋ₘ où : R¹ et R³ peuvent être indépendamment un H, un C₁ à C₁₀, linéaire ou ramifié, saturé, insaturé de façon unique ou multiple, cyclique, partiellement ou totalement fluoré ; R² et R⁴ peuvent être indépendamment un C₁ à C₁₀, linéaire ou ramifié, saturé, insaturé de façon unique ou multiple, cyclique, aromatique, partiellement ou totalement fluoré ; et n est 0 ou 1 et m est 0, 1, ou 2 ;
un composé de la formule R¹ₙ(R²O)₂₋ₙHSi-SiHR³ₘ(OR⁴)₂₋ₘ où R¹ et R³ peuvent être indépendamment un H, un C₁ à C₁₀, linéaire ou ramifié, saturé, insaturé de façon unique ou multiple, cyclique, partiellement ou totalement fluoré ; R² et R⁴ peuvent être indépendamment un C₁ à C₁₀, linéaire ou ramifié, saturé, insaturé de façon unique ou multiple, cyclique, aromatique, partiellement ou totalement fluoré ; et n est 0 ou 1 et m est 0, 1, ou 2 ; et
un composé de la formule R¹ₙ(R²O)₂₋ₙHSi-R⁵-SiHR³ₘ(OR⁴)₂₋ₘ où R¹ et R³ peuvent être indépendamment un H, un C₁ à C₁₀, linéaire ou ramifié, saturé, insaturé de façon unique ou multiple, cyclique, partiellement ou totalement fluoré ; R² et R⁴ peuvent être indépendamment un C₁ à C₁₀, linéaire ou ramifié, saturé, insaturé de façon unique ou multiple, cyclique, aromatique, partiellement ou totalement fluoré ; R⁵ peut être indépendamment un C₁ à C₁₀, linéaire ou ramifié, saturé, insaturé de façon unique ou multiple, cyclique, partiellement ou totalement fluoré ; et n est 0 ou 1 et m est 0, 1, ou 2.

5. Procédé selon la revendication 4 dans lequel l'alkoxysilane est le diéthoxyméthylsilane.

6. Procédé selon la revendication 1 dans lequel la composition d'organosilicium comprend un carboxysilane.

7. Procédé selon la revendication 6 dans lequel le carboxysilane est choisi parmi le groupe consistant en :
un composé de la formule R¹ₙ(R²C(O)O)₃₋ₙSiH où : R¹ peut être indépendamment un H, un C₁ à C₁₀, linéaire ou ramifié, saturé, insaturé de façon unique ou multiple, cyclique, partiellement ou totalement fluoré ; R² peut être indépendamment un H, un C₁ à C₁₀, linéaire ou ramifié, saturé, insaturé de façon unique ou multiple, cyclique, aromatique, partiellement ou totalement fluoré ; et n est 0, 1, ou 2 ;
un composé de la formule R¹ₙ(R²C(O)O)₂₋ₙHSi-O-SiHR³ₘ(O(O)CR⁴)₂₋ₘ où R¹ et R³ peuvent être indépendamment un H, un C₁ à C₁₀, linéaire ou ramifié, saturé, insaturé de façon unique ou multiple, cyclique, partiellement ou totalement fluoré ; R² et R⁴ peuvent être indépendamment un H, un C₁ à C₁₀, linéaire ou ramifié, saturé, insaturé de façon unique ou multiple, cyclique, aromatique, partiellement ou totalement fluoré ; et n est 0 ou 1 et m est 0, 1, ou 2 ;
un composé de la formule R¹n(R²C(O)O)₂₋ₙHSi-SiHR³ₘ(O(O)CR⁴)₂₋ₘ où : R¹ et R³ peuvent être indépendamment un H, un C₁ à C₁₀, linéaire ou ramifié, saturé, insaturé de façon unique ou multiple, cyclique, partiellement ou totalement fluoré ; R² et R⁴ peuvent être indépendamment un H, un C₁ à C₁₀, linéaire ou ramifié, saturé, insaturé de façon unique ou multiple, cyclique, aromatique, partiellement ou totalement fluoré ; et n est 0 ou 1 et m est 0, 1, ou 2 ; et
un composé de la formule R¹ₙ(R²C(O)O)₂₋ₙHSi-R⁵-SiHR³ₘ(O(O)CR⁴)₂₋ₘ où R¹ et R³ peuvent être indépendamment un H, un C₁ à C₁₀, linéaire ou ramifié, saturé, insaturé de façon unique ou multiple, cyclique, partiellement ou totalement fluoré ; R² et R⁴ peuvent être indépendamment un H, un C₁ à C₁₀, linéaire ou ramifié, saturé, insaturé de façon unique ou multiple, cyclique, aromatique, partiellement ou totalement fluoré ; R⁵ peut être indépendamment un C₁ à C₁₀, linéaire ou ramifié, saturé, insaturé de façon unique ou multiple, cyclique, partiellement ou totalement fluoré ; et n est 0 ou 1 et m est 0, 1, ou 2.

8. Procédé selon une quelconque revendication précédente dans lequel l'impureté basique est choisie parmi le groupe consistant en : l'ammoniac, l'urée, l'éthylènediamine, la diéthylènetriamine, la triéthylènetétramine, la pyridine, la triéthylènediamine, la diéthanolamine, la triéthanolamine, l'aminopropyldiéthanolamine, le bis(p-aminocyclohexyl)méthane, la quinuclidine, le 3-Quinuclidinol, la triméthylamine, la tétraméthyléthylènediamine, la tétraméthyl-1,3-propanediamine, l'oxyde de triméthylamine, la N,N,N-tris(N',N'-diméthyl-3-aminopropyl)amine, la 3,3'-bis(diméthylamino)-N-méthyldipropylamine, l'hydroxyde de choline, la 4-diméthylaminopyridine, la diphénylamine, la tétraéthylènepentamine, et des mélanges de ceux-ci.

9. Procédé selon la revendication 8 dans lequel l'impureté basique est choisie parmi le groupe consistant en : l'ammoniac, l'urée, l'éthylènediamine, et des mélanges de ceux-ci.

10. Procédé selon une quelconque revendication précédente dans lequel le gaz acide est le dioxyde de carbone.

11. Procédé selon une quelconque revendication précédente comprenant en outre l'étape de mise du produit d'organosilicium purifié en contact avec un gaz inerte.

12. Procédé selon une quelconque revendication précédente dans lequel l'étape (les étapes) de suppression comprend (comprennent) un processus de filtration.
